# EUROPÄISCHE PATENTSCHRIFT

(11) **EP 2 404 788 B1**
(45) Veröffentlichungstag und Bekanntmachung des Hinweises auf die Patenterteilung: **07.09.2016**
(21) Anmeldenummer: 11172692.3
(22) Anmeldetag: 05.07.2011
(51) Int. Cl.: B60R 19/18, B32B 5/18

(54) **Bauelement zur Aufnahme von Energie**
Module for absorbing energy
Composant destiné à la réception d'énergie

(30) Priorität: 08.07.2010 EP 10168928
(43) Veröffentlichungstag der Anmeldung: 11.01.2012
(73) Patentinhaber: BASF SE, 67056 Ludwigshafen am Rhein (DE)
(72) Erfinder: Heß, Heiko, 67742 Lauterecken (DE); Ruch, Joachim, 67157 Wachenheim (DE); Sandler, Jan Kurt Walter, 69126 Heidelberg (DE); Wüst, Andreas, 64673 Zwingenberg (DE); Weiler, Helge, 68535 Edingen-Neckarhausen (DE)

(56) Entgegenhaltungen:
- EP-A2- 0 323 038
- WO-A2-2008/016653
- JP-A- 2004 168 077
- KR-B1- 100 814 862
- Unbekannt: "Polypropylen", Wikipedia, die freie Enzyklopädie , 9. Februar 2009 (2009-02-09), XP002661726, Gefunden im Internet: URL:http://web.archive.org/web/20090209004 533/http://de.wikipedia.org/wiki/Polypropy len [gefunden am 2011-10-19]
- Found, Michael S.: "Experimental techniques and design in composite materials 4", 2002, A.A.Balkema, Swets & Zeitlinger B.V., Lisse, Niederlande, XP002661727, ISBN: 90 5809 370 0 * Seiten 33-35 * * Abbildung 4 *

## Beschreibung

Die Erfindung betrifft ein Bauelement zur Aufnahme von Energie von einem auf das Bauelement ausgeübten Stoß durch Deformation, wobei das Bauelement einen Kern aus einem Polymerschaum enthält.

Bauelemente zur Aufnahme von Energie von einem auf das Bauelement ausgeübten Stoß durch Deformation werden zum Beispiel im Automobilbau zum Fußgängerschutz zwischen dem Stoßfängerquerträger und dem Stoßfänger eines Fahrzeugs eingesetzt. Derzeit eingesetzte Bauelemente zur Aufnahme von Energie im Automobilbau, die auch als Crash-Absorber bezeichnet werden, werden zum Beispiel aus Partikelschäumen auf Polypropylenbasis oder Reaktionsschäumen auf Basis von Polyurethan hergestellt. Diese Werkstoffsysteme kennzeichnet, dass sie bei statischer Druckbelastung oder dynamischer Stoßbelastung einen niedrigen E-Modul aufweisen, woraus große Deformationswege resultieren.

Aufgrund des Trends in der Automobilindustrie, immer kompaktere Kleinwagen zu bauen, die zum Beispiel im Stadteinsatz wenig Parkraum benötigen, geht das Bestreben einher, auch die Bauelemente zum Fußgängerschutz in Bezug auf den maximalen notwendigen Bauraum zu reduzieren. Damit trotzdem der Fußgängerschutz gewährleistet wird, darf eine maximale Kraft auf den Crash-Absorber nicht überschritten werden und die Energie muss über einen minimalen Deformationsweg des Crash-Absorbers vollständig absorbiert werden. Zur Auslegung der Crash-Absorber werden in Abhängigkeit vom Automobilhersteller unterschiedliche Testverfahren praktiziert. Hierdurch ergeben sich abweichende Randbedingungen in Bezug auf die maximal zulässigen Kraft- und Deformationswege.

Nachteil der derzeit eingesetzten Crash-Absorber aus einem elastischen, reversiblen Schaumstoffmaterial ist, dass diese eine vorgegebene Mindestgröße benötigen, um die geforderten Kräfte absorbieren zu können.

Ein weiterer Nachteil von Crash-Absorbern aus einem Schaumstoffmaterial ist, dass diese kein ideales Absorptionsverhalten aufweisen. Ein ideales Absorptionsverhalten ist dann gegeben, wenn die Kraft/Weg-Kurve einen rechteckigen Verlauf zeigt. Im Belastungsfall führt dies zu einem sprunghaften Anstieg der Kraft auf den maximal zulässigen Wert und dieser Wert verläuft anschließend konstant, bis er beim Erreichen des maximal gewünschten Deformationsweges sprunghaft wieder auf Null zurückfällt. Bei Schaumstoffabsorbem führt eine Belastung nicht zu einem sprunghaften Anstieg sondern die Kraft steigt zunächst eher langsam über dem Deformationsweg an.

Die absorbierte Energie wird durch die unter dem jeweiligen Graph liegende bzw. vom Graphen umhüllte Fläche dargestellt.

Bei einem vollelastischen Material nimmt das Material nach Beendigung der Einwirkung durch die Kraft wieder seine ursprüngliche Form an. Ein teilelastisches Material verformt sich ebenfalls wieder zurück, erreicht jedoch nicht mehr vollständig die Ausgangsform.

Neben Crash-Absorbern aus einem Schaumstoffmaterial sind auch Crash-Absorber aus Metallstrukturen oder aus Kunststoffstrukturen, die im Allgemeinen verrippt oder als Wabenstruktur ausgeführt sind, bekannt. Nachteil dieser als Rippenstruktur oder Wabenstruktur ausgeführten Crash-Absorber aus Metall oder Kunststoff ist, dass diese üblicherweise ein plötzliches Versagen zeigen und keine gleichmäßige Deformation bei Einwirkung einer Kraft, zum Beispiel durch einen auftreffenden Stoß.

Entsprechende Crash-Absorber für Kraftfahrzeuge sind zum Beispiel aus der gattungsbildenden WO-A 2008/016653, sowie EP-A 0 323 038 oder KR-B 100814862 bekannt.

Aufgabe der vorliegenden Erfindung ist es daher, ein Bauelement zur Aufnahme von Energie von einem auf das Bauelement ausgeübten Stoß durch Deformation bereitzustellen, das die aus dem Stand der Technik bekannten Nachteile nicht aufweist. Insbesondere soll das Bauelement bei Energieaufnahme eine annähernd ideale Kraft/Weg-Kurve mit annähernd rechteckförmigem Verlauf aufweisen und eine im Wesentlichen gleichförmige Deformation bei Auftreffen eines Stoßes.

Gelöst wird die Aufgabe durch ein Bauelement zur Aufnahme von Energie von einem auf das Bauelement ausgeübten Stoß durch Deformation, wobei das Bauelement einen Kern aus einem Polymerschaum mit einer Dichte von maximal 0,2 g/cm³ und einem Druck-E-Modul von maximal 200 MPa gemessen nach DIN EN 826 enthält, wobei der Kern einen Einleger aus einem Polymermaterial enthält, wobei das Polymermaterial des Einlegers eine Dichte von maximal 2,0 g/cm³ und einen Zug-E-Modul von mindestens 700 MPa, gemessen nach DIN ISO 527 bei Raumtemperatur und trockenem Probekörper, aufweist, wobei der Einleger aus Zylindersegmenten gebildet wird, die jeweils in entgegengesetzter Richtung ausgerichtet sind, wobei sich jeweils zwei Zylindersegmente schneiden oder jeweils kurze Abschnitte der Zylindersegmente vorgesehen sind, die jeweils nebeneinander im Polymerschaum des Kerns angeordnet sind.

Durch den erfindungsgemäßen Aufbau mit einem Kern aus einem Polymerschaum und der Hülle und/oder dem Einleger aus einem Polymermaterial lässt sich ein dem idealen Kraft/Weg-Verlauf angenäherter Verlauf erzielen. Insbesondere wird zunächst ein nahezu sprunghafter Anstieg der Kraft realisiert, die nach diesem Anstieg bis zum Erreichen des maximalen Deformationsweges nahezu konstant verläuft. Durch die Hülle und/oder den Einleger wird erzielt, dass im Vergleich zu einem Crash-Absorber aus einem reinen Polymerschaum die gleiche Energiemenge mit einem kürzeren Deformationsweg aufgenommen werden kann. Hierdurch können kleinere Bauelemente realisiert werden, die die gleiche Energiemenge absorbieren. Dies ermöglicht insgesamt einen kompakteren Aufbau.

Durch die Verwendung des Kerns aus Polymerschaum wird erzielt, dass das Bauelement bei Einwirken eines Stoßes einen im Wesentlichen konstanten Kraftverlauf bei gleichmäßiger Deformation erfährt und kein plötzliches Zusammenbrechen erfolgt.

Der für das Bauelement eingesetzte Polymerschaum weist erfindungsgemäß eine Dichte von maximal 0,2 g/cm³ auf. Bevorzugt weist der Schaum eine Dichte im Bereich von 0,01 bis 0,2 g/cm³ auf. Mehr bevorzugt liegt die Dichte des Polymerschaums im Bereich von 0,02 bis 0,1 g/cm³ und insbesondere im Bereich von 0,03 bis 0,06 g/cm³.

Der Druck-E-Modul des Polymerschaums liegt erfindungsgemäß bei maximal 200 MPa. Bevorzugt liegt der Druck-E-Modul im Bereich von 0,05 bis 200 MPa, mehr bevorzugt im Bereich von 0,1 bis 100 MPa und insbesondere im Bereich von 0,2 bis 50 MPa.

Das Polymermaterial der Hülle und/oder des Einlegers weist erfindungsgemäß eine Dichte von maximal 2,0 g/cm³ auf. Bevorzugt ist die Dichte des Polymermaterials der Hülle und/oder des Einlegers kleiner als 1,7 g/cm³ und besonders bevorzugt kleiner als 1,4 g/cm³.

Der Zug-E-Modul des Polymermaterials der Hülle und/oder des Einlegers beträgt erfindungsgemäß mindestens 700 MPa. Bevorzugt ist der Zug-E-Modul größer als 900 MPa und besonders bevorzugt größer als 1100 MPa.

Der Druck-E-Modul des Polymerschaums wird gemessen nach DIN EN 826.

Der Zug-E-Modul des Polymermaterials der Hülle und/oder des Einlegers wird gemessen nach DIN EN ISO 527, wobei ein trockener Probekörper bei Raumtemperatur in einem Zugversuch quasistatisch belastet wird. Die Geometrie des Probekörpers, die Messwerterfassung, die Prüfgeschwindigkeit und die Auswertung sind in der Norm beschrieben. Aus der Prüfung wird als Ergebnis ein Spannungs-Dehnungs-Diagramm, aus dem der Zug-E-Modul, Streckspannung, Streckdehnung, Bruchspannung, Bruchdehnung, Zugfestigkeit und Poissonzahl ermittelt werden können.

Durch die Verwendung eines Polymerschaums mit einer Dichte von maximal 0,2 g/cm³ und einem Druck-E-Modul von maximal 200 MPa und einer Hülle und/oder einem Einleger aus einem Polymermaterial mit einer Dichte von maximal 2,0 g/cm³ und einem Zug-E-Modul von mindestens 700 MPa kann ein Kraftanstieg unter dynamischer Belastung von mindestens 400 N/mm, bevorzugt mindestens 700 N/mm und insbesondere mindestens 1000 N/mm erreicht werden, bis ein maximal zulässiger Wert für die einwirkende Kraft Fₘₐₓ erreicht wird. Der maximal zulässige Kraftwert Fₘₐₓ ergibt sich aus dem bevorzugten Einsatzgebiet des Bauelements, zum Beispiel aus Fußgängerschutzanforderungen oder aus der Forderung nach möglichst gering zu haltenden Reparaturkosten bei einem Bagatellschaden.

Durch computerunterstützte Optimierungsverfahren ist es möglich, die Kraftkurve ausreichend gut an die ideale Aborberkennlinie anzupassen (z.B. mit einer Abweichung von maximal +/- 15%) und darüber hinaus ist es möglich, auch ein anderes, aus der speziellen Anwendung heraus resultierendes Kraftprofil darzustellen, beispielsweise ein linearer Abfall der Kraftkurve ab einem bestimmten Deformationsweg.

Der für das Bauelement eingesetzte Polymerschaum kann ein Polymerschaum mit einer thermoplastischen oder mit einer duroplastischen Matrix sein. Die Herstellung des Schaums erfolgt dabei nach dem Fachmann bekannten Verfahren. Geeignete thermoplastische Polymerschäume, die zur Herstellung des Bauelements eingesetzt werden können, sind Schaumstoffe, die aus Styrol-(Co)polymeren, Polyolefinen, Polyestern, Polyethern, Polyacrylaten, Polyacetalen, Polyamiden, Polyurethanen, Polymeren mit Vinylgruppen oder einer Kombination dieser Kunststoffe aufgebaut sind.

Geeignete Styrol-(Co)polymere sind zum Beispiel glasklares Polystyrol (GPPS), schlagzäh-modifiertes Polystyrol (HIPS), Acrylnitril-Butadien-Styrol-Polymere (ABS), Styrol-Acrylnitril-Polymere (SAN) oder Mischungen davon sowie Mischungen mit Polyphenylenether (PPE).

Als Polyolefine eignen sich insbesondere Polyethylen (PE) und Polypropylen (PP).

Geeignete Polyamide sind zum Beispiel Polyamid 6/6, Polyamid 6, Polyamid 6/12 oder Polyamid 6/10.

Geeignete Polyester sind insbesondere Polyethylenterephthalat (PET) oder Polybutylenterephthalat (PBT). Als Polyacetal eignet sich insbesondere Polyoxymethylen (POM).

Wenn als Polymerschaum ein Schaum mit duroplastischer Matrix eingesetzt wird, so wird vorzugsweise ein auf Polyurethan basierender Polymerschaum eingesetzt.

Das zur Herstellung des Polymerschaums verwendete Polymermaterial kann faserverstärkt sein. Hierzu werden vorzugsweise Kurzfasern eingesetzt. Als Fasern eignen sich zum Beispiel Glasfasern, Kohlenstofffasern, Aramidfasern oder natürliche Fasern.

In einer bevorzugten Ausführungsform ist der eingesetzte Polymerschaum, insbesondere bei Einsatz eines Polymerschaums auf thermoplastischer Basis, ein Partikelschaum. Als Partikelschaum wird dabei ein Polymerschaum verstanden, der aus einzelnen Partikeln aus geschäumtem Polymermaterial besteht, wobei die einzelnen Partikel miteinander versintert werden. Das Versintern der Partikel erfolgt zum Beispiel mit Hilfe von Heißdampf. Zur Herstellung von Formteilen werden die Partikel in eine poröse Form gegeben und in der Form miteinander versintert. Nach Abkühlen und Stabilisieren können die so hergestellten Formteile entnommen werden.

Das Polymermaterial der Hülle und/oder des Einlegers ist vorzugsweise ausgewählt aus Polyestern, Polyamiden, Polyethern, Polyacrylaten, Polyolefinen, Polyacetalen, Polymeren, die aus Vinylgruppen enthaltenden Monomeren aufgebaut sind, Styrol(Co)-Polymerisaten und Mischungen daraus.

Geeignete Polyester, die zur Herstellung der Hülle und/oder des Einlegers eingesetzt werden können, sind zum Beispiel Polyethylenterephthalat oder Polybutylenterephthalat.

Als Polyamide eignen sich zum Beispiel Polyamid 6, Polyamid 11, Polyamid 6/6, Polyamid 6/10, Polyamid 6/12 oder Polyamid 12.

Geeignete Polyether, die zur Herstellung der Hülle und/oder des Einlegers verwendet werden können, sind zum Beispiel Polyethylenglykol, Polypropylenglykol oder Polyethersulfone (PESU oder PES).

Geeignete Polyacrylate zur Herstellung der Hülle und/oder des Einlegers sind zum Beispiel Poly(meth)acrylsäureester, Poly(meth)acrylat.

Als Polyolefine zur Herstellung der Hülle und/oder des Einlegers eignen sich zum Beispiel Polyethylen, Polypropylen, Polybuten-1 oder Polytretrafluorethen. Als Polyethylen kann sowohl HTPE als auch LTPE eingesetzt werden. HTPE bezeichnet dabei Hochtemperatur-Polyethylen und LTPE ein Niedertemperatur-Polyethylen.

Als Polyacetal eignet sich insbesondere Polyoxymethylen.

Geeignete Polymere aus Vinylgruppen enthaltenden Monomeren sind zum Beispiel Polyvinylchlorid, Polyvinylidenchlorid, Polystyrol, schlagzäh-modifiziertes Styrol, Polyvinylcarbazol, Polyvinylacetat oder Polyvinylalkohol.

Geeignete Styrol(Co)polymerisate sind zum Beispiel Styrol-Acrylnitril-Copolymere, Acrylnitril-Butadien-Styrol-Copolymere oder Styrol-Butadien-Copolymere.

Ferner eignet sich auch Polyacrylnitril.

Die eingesetzten Polymere können dabei jeweils einzeln oder in Mischung verwendet werden.

Den einzelnen Polymeren für die Hülle und/oder den Einleger sowie für den Kern können übliche Additive, zum Beispiel Weichmacher, Vernetzer, Schlagzäh-Modifizierer, Flammschutzmittel, Nanopartikel, beispielsweise Kohlenstoffnanoröhrchen, SiO₂, Al₂O₃ oder weitere, dem Fachmann bekannte und von der Art der Anwendung abhängige Additive, die üblicherweise Polymeren zugesetzt werden, beigemischt sein.

Um die Festigkeit der Hülle und/oder des Einlegers zu erhöhen, ist es bevorzugt, wenn das Polymermaterial der Hülle und/oder des Einlegers faserverstärkt ist. Zur Verstärkung können sowohl Endlosfasern, zum Beispiel als Gewebe oder Gestricke oder als Rovings eingesetzt werden. Weiterhin ist es auch möglich, Langfäsern oder Kurzfasern einzusetzen. Bevorzugt ist der Einsatz von Kurzfasern.

Als Fasermaterial eignen sich insbesondere Kohlenstofffasern, Glasfasern, Aramidfasern, Naturfasern, Basaltfasern, Polymerfasern oder Metallfasern. Besonders bevorzugt werden als Fasern Kurzglasfasern eingesetzt. Als Kunststoff für den Einleger und/oder die Hülle eignen sich zum Beispiel kurzglasfaserverstärkte technische Kunststoffe, beispielsweise Polyamid mit 30% Glasfaseranteil.

Wenn der Kern mit einer Hülle aus einem Polymermaterial umschlossen ist, so kann die Hülle den Kern teilweise oder vollständig umschließen. Bei Einsatz des Bauelements in einem Kraftfahrzeug ist es insbesondere bevorzugt, wenn die Hülle den Kern nur teilweise umschließt, so dass der Kern auf der dem Stoßfänger zuweisenden Seite mit der Hülle umschlossen ist. Lediglich die dem Querträger zuweisende und damit dem Stoßfänger abweisende Seite bleibt in diesem Fall unverhüllt.

Wenn der Kern einen Einleger umfasst, so kann dieser zum Beispiel Stege aufweisen, die in einem Winkel von weniger als 90° zur Einwirkrichtung des Stoßes ausgerichtet sind. Die Ausrichtung der Stege führt dazu, dass diese sich bei Einwirkung eines Stoßes zunächst verformen und bei weiterem Einwirken des Stoßes schließlich brechen. Hierdurch wird Energie aus dem Stoß absorbiert. Durch gezielte Gestaltung des Einlegers und/oder der Hülle lässt sich das Brechen des Einlegers und/oder der Hülle so abstimmen, dass sich die gewünschte Kraft/Weg-Kurve ergibt, zum Beispiel mit computerunterstützten Verfahren zur Gestaltoptimierung.

Zur Erhöhung der Stabilität der Einleger ist es weiterhin vorteilhaft, wenn benachbarte Stege des Einlegers durch Querstege miteinander verbunden sind. Hierbei ist es möglich, dass die Stege und die Querstege rechtwinklig miteinander verbunden sind. Bei einer solchen Ausführung von Stegen und Querstegen ist es möglich, dass die Stege zum Beispiel senkrecht zum Stoßfängerträger ausgerichtet sind und die Querstege parallel dazu. Alternativ ist es auch möglich, dass die Stege und die Querstege jeweils einen 45°-Winkel zum Stoßfängerträger bilden. Auch jeder beliebige Winkel zwischen diesen Ausrichtungen ist denkbar.

Weiterhin ist es auch möglich, dass Stege und Querstege nicht mit einem 90°-Winkel miteinander verbunden sind, sondern dass die Querstege in einem beliebigen anderen Winkel die einzelnen Stege miteinander verbinden. Hierbei ist es einerseits möglich, dass die Querstege alle den gleichen Winkel aufweisen oder dass die Querstege unterschiedliche Winkel aufweisen. Weiterhin können die Querstege zum Beispiel auch eine zickzack- oder wellenförmige Gestaltung zwischen den einzelnen Stegen aufweisen.

Weiterhin ist es auch möglich, dass der Einleger zum Beispiel in Form eines T-Profils oder eines Doppel-T-Profils oder auch in Form eines U-Profils gestaltet ist. Wenn der Einleger in Form eines U-Profils gestaltet ist, so kann dieses sowohl abgerundet als auch winklig ausgeführt sein.

Erfindungsgemäß wird der Einleger in Form von Zylindersegmenten gebildet, die jeweils in entgegengesetzter Richtung ausgerichtet sind.

Weiterhin ist es auch möglich, Einleger einzusetzen, deren Querschnitt sich in Richtung der einwirkenden Kraft ändert. Hierdurch lässt sich die Form des Einlegers so anpassen, dass ein Versagen zu einem annähernd idealen Verlauf der Kraft/Weg-Kurve führt.

Um eine stabile Verbindung von Hülle und/oder Einleger und dem Kern zu erhalten, ist es zum Beispiel möglich, den Einleger und/oder die Hülle mit dem Kern zu verkleben oder zu verschweißen. Alternativ ist jedoch zum Beispiel auch eine formschlüssige Verbindung von Einleger und/oder Hülle mit dem Kern möglich. Durch das Verkleben oder Verschweißen bzw. die formschlüssige Verbindung wird erreicht, dass sich Hülle und/oder Einleger nicht auf einfache Weise vom Kern trennen lassen.

Das erfindungsgemäße Bauelement eignet sich insbesondere als Absorberstruktur zum Fußgängerschutz, die zwischen einem Querträger und einem Stoßfänger eines Kraftfahrzeugs angeordnet ist.

Neben dem Einsatz als Absorberstruktur zum Fußgängerschutz in einem Kraftfahrzeug kann das erfindungsgemäße Bauelement auch als Absorber im Bereich von Verpackungen, von Gütern aller Art, insbesondere hochwertigen Gütern, eingesetzt werden. Auch eine Verwendung zum Dämpfen von Stößen im Insassenschutz bei Kraftfahrzeugen, beispielsweise bei Kopfaufschlag auf die Instrumententafel, als KniePolster, als Einsatz in Sitzen zum Schutz der Fond-Passagiere, als Einsatz in Türverkleidungen, im Dachhimmel oder der A-, B- oder C-Säule ist möglich.

Für das erfindungsgemäße Bauelement ist es nicht notwendig, dass die Kombination zwischen Polymerschaum und Hülle und/oder Einleger eine kompakte Bauform aufweist, die den gesamten Bauraum, beispielsweise zwischen Querträger und Stoßfänger, vollständig ausfüllt. Vielmehr ist es möglich, durch gezielte Variation der Geometrie Bereiche zu gestalten, die weder Polymerschaum noch Hülle und/oder Einleger enthalten und die eine Deformation der Bauelemente in diesen zunächst nicht ausgefüllten Bereich ermöglichen.

Das erfindungsgemäße Bauteil kann zum Beispiel durch Umschäumen und/oder Einschäumen von Hülle und/oder Einleger hergestellt werden. Auch ist es möglich, in einem späteren, gesonderten Arbeitsschritt den Kern und die Hülle und/oder den Einleger miteinander zu verbinden, zum Beispiel durch Schnappverbindungen, Kleben usw. Dadurch bietet sich auch die Möglichkeit, die Kennlinie, das heißt die Kraft/Weg-Kurve, des Bauelements durch gezielte Änderung der Materialien, zum Beispiel durch Änderung der Schaumdichte, des Fasergehalts und/oder der Materialauswähl für den speziellen Anwendungsfall auszulegen und an diesen anzupassen, ohne dass andere Werkzeuge zur Herstellung gebraucht werden.

Ausführungsbeispiele der Erfindung sind in der Zeichnung dargestellt und werden in der nachfolgenden Beschreibung näher erläutert.

Es zeigen:
- Figur 1: eine dreidimensionale Darstellung eines Querträgers mit Bauelement zur Aufnahme von Energie in einer ersten Ausführungsform,
- Figur 2: eine Schnittdarstellung der in Figur 1 dargestellten Struktur,
- Figur 3: eine Schnittdarstellung eines Querträgers mit Bauelement zur Aufnahme von Energie und Stoßfänger in einer zweiten Ausführungsform,
- Figuren 4 bis 8: verschiedene Geometrien für Einleger.

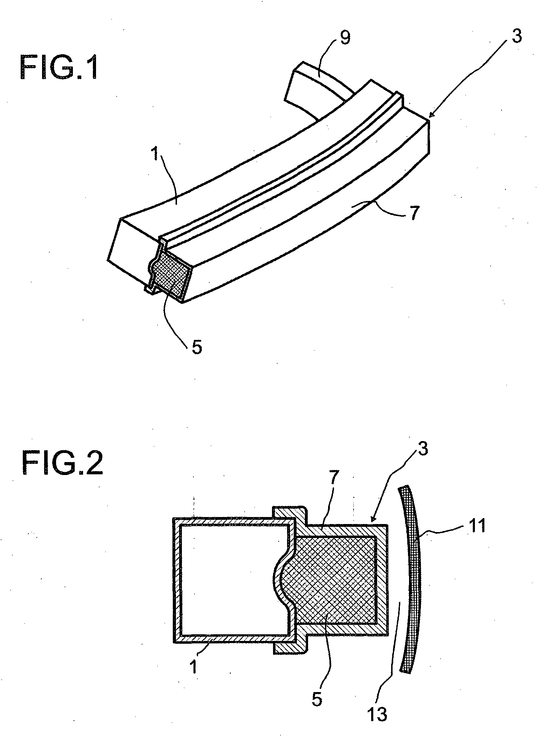

Figur 1 zeigt eine dreidimensionale Darstellung eines Querträgers eines Kraftfahrzeugs mit einem Bauelement zur Aufnahme von Energie in einer ersten Ausführungsform.

An einem Querträger 1 für einen Stoßfänger ist ein Bauelement 3 zur Aufnahme von Energie von einem auf das Bauelement ausgeübten Stoß angebracht.

In der in Figur 1 dargestellten Ausführungsform umfasst das Bauelement 3 einen Kern 5 aus einem Polymerschaum, der von einer Hülle 7 aus einem Polymermaterial mit einer Dichte von maximal 2,0 g/cm³ und einem Zug-E-Modul von mindestens 700 MPa gefertigt ist. Bei Einwirkung eines Stoßes auf das Bauelement 3 zur Aufnahme von Energie nimmt zunächst die Hülle 7 Energie auf. Bei Erreichen einer von Geometrie und Material abhängigen auf die Hülle 7 wirkenden maximalen Kraft verformt sich die Hülle 7 und bricht. Hierdurch wird ein nahezu senkrechter Anstieg im Kraft-WegVerlauf erzielt. Nachdem die Hülle 7 versagt hat, zum Beispiel durch Bruch, wird weitere Energie durch den Kern 5 aus dem Polymerschaum aufgenommen. Hierdurch ist ein nahezu rechteckiger Verlauf der Kraft/Weg-Kurve realisierbar.

Das Bauelement 3 zur Aufnahme von Energie bei Auftreffen eines Stoßes wird üblicherweise zum Fußgängerschutz eingesetzt und ist zwischen dem Querträger 1 und einem in Figur 1 nicht dargestellten Stoßfänger montiert. Die Montage des Querträgers 1 erfolgt im Allgemeinen mit einer sogenannten Crashbox 9 an der Fahrzeugkarosserie. Die Crashbox 9 nimmt zusätzlich Energie auf, indem diese sich bei Einwirkung einer Kraft auf den Stoßfänger und den Querträger 1 verformt.

Die Befestigung des Bauelements 3 zur Aufnahme von Energie am Querträger 1 kann auf jede beliebige, dem Fachmann bekannte Weise erfolgen. So ist zum Beispiel eine formschlüssige oder eine kraftschlüssige Verbindung möglich. Das Bauelement 3 kann zum Beispiel mit dem Querträger 1 verschraubt oder vernietet werden. Auch eine Klemmverbindung oder eine Klebverbindung ist denkbar. Wenn der Querträger 1 aus einem Kunststoffmaterial gefertigt wird, ist es weiterhin auch möglich, dass das Bauelement 3 mit dem Querträger 1 verschweißt wird.

In Figur 2 ist eine Schnittdarstellung des in Figur 1 dargestellten Verbunds gezeigt.

Das Bauelement 3 zur Aufnahme von Energie, das den Kern 5 und die Hülle 7 umfasst, ist mit dem Querträger 1 verbunden. Hierbei ist die Hülle 7 so ausgebildet, dass diese den Querträger 1 überragt. Die Verbindung von Querträger 1 und Bauelement 3 kann dann zum Beispiel mit dem den Querträger 1 überragenden Teil der Hülle 7 erfolgen.

An das Bauelement 3 schließt sich der Stoßfänger 11 an. Üblicherweise liegt der Stoßfänger 11 nicht auf dem Bauelement 3 auf, sondern es befindet sich ein Spalt 13 zwischen Stoßfänger 11 und Bauelement 3. Bei einem Stoß bewegt sich nun der Stoßfänger 11 zunächst in Richtung des Bauelements 3, das dann die auf den Stoßfänger 1 wirkende Kraft aufnimmt. Sobald der Stoßfänger 1 auf die Hülle 7 trifft, wirkt die Kraft auf die Hülle 7, bis sich diese verformt und versagt. Nach Versagen der Hülle 7 wirkt die Kraft dann weiter auf den Kern 5 aus Polymerschaum. Hierbei wird das Bauelement 3 weiter deformiert, indem der Polymerschaum komprimiert wird, bis dieser seine maximale Dichte erreicht hat und nicht weiter komprimiert werden kann.

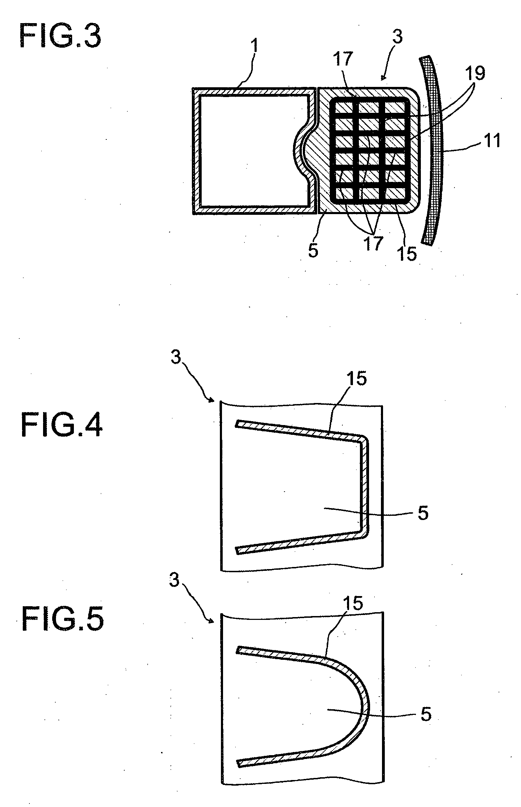

Alternativ zu der in Figur 2 dargestellten Hülle 7 ist es auch möglich, einen Einleger zu verwenden, der von dem Polymerschaum des Kerns 5 ausgefüllt und umschlossen ist. Ein solches Bauelement mit Einleger ist in Figur 3 dargestellt.

Der Aufbau des Verbundes aus Querträger 1, Bauelement 3 zur Aufnahme von Energie, und Stoßfänger 11 entspricht dem in Figur 2 dargestellten. Im Unterschied zu der in Figur 2 dargestellten Ausführungsform ist in der in Figur 3 dargestellten Ausführungsform anstelle einer Hülle ein Einleger 15 vorgesehen, der in den Kern 5 aus Polymermaterial eingelegt ist. Der Einleger 15 wird ebenso wie die Hülle 7 aus einem Polymermaterial gefertigt, das eine Dichte von maximal 2,0 g/cm³ und einen Zug-E-Modul von mindestens 700 MPa gemessen nach DIN EN ISO 527 aufweist.

In der in Figur 3 dargestellten Ausführungsform ist der Einleger 15 aus Stegen 17 aufgebaut, die sich vom Querträger 1 in Richtung des Stoßfängers 11 erstrecken. Die einzelnen Stege 17 sind mit Querstegen 19 miteinander verbunden. In der hier dargestellten Ausführungsform sind die Querstege 19 senkrecht zu den Stegen 17 angeordnet und erstrecken sich parallel zu Querträger 11 und Stoßfänger 1. Alternativ zu der in Figur 3 dargestellten Ausführungsform ist es auch möglich, dass sich die Querstege 19 nicht parallel zu Stoßfänger 11 und Querträger 1 erstrecken, sondern in einem Winkel. Auch eine zickzack- oder wellenförmige Gestaltung ist möglich.

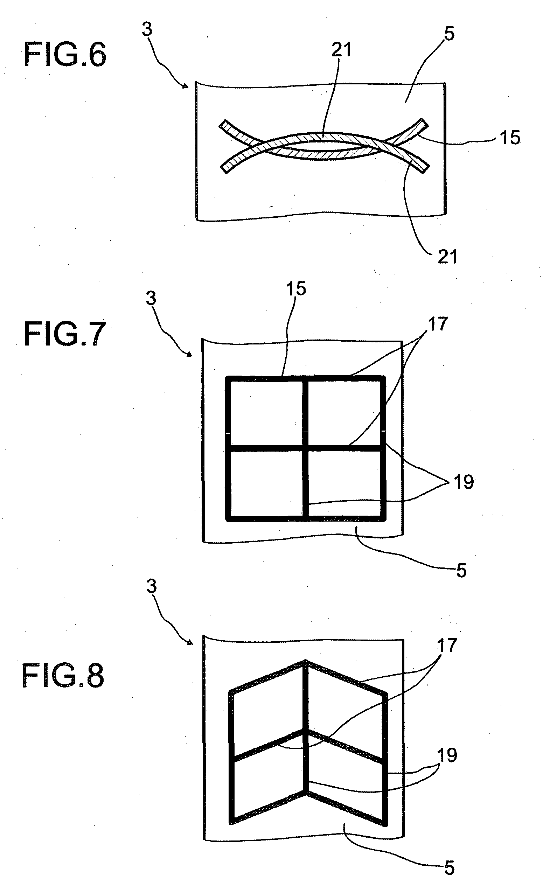

Weitere alternative Ausgestaltungen für den Einleger 15 sind in den Figuren 4 bis 8 dargestellt, wobei die erfindungsgemäße Ausgestaltung in Figur 6 dargestellt ist.

In den Figuren 4 und 5 ist der Einleger als U-förmiges Profil gestaltet. Die Form des Einlegers 15 entspricht dabei im Wesentlichen der Hülle 7, wie sie in den Figuren 1 und 2 dargestellt ist. Im Unterschied zu einer Hülle wird der Einleger 15 jedoch vollständig vom Polymerschaum des Kerns 5 umschlossen. Wenn der Einleger 15 als U-förmiges Profil gestaltet ist, wie es in den Figuren 4 und 5 dargestellt ist, so wird das Bauelement 3 vorzugsweise mit der offenen Seite des als U-förmiges Profil ausgebildeten Einlegers 15 am Querträger 1 befestigt Die Kraft wirkt somit zunächst auf die geschlossene Seite des als U-förmiges Profil gestalteten Einlegers 15.

Erfindungsgemäß wird der Einleger 15 in Form von Zylindersegmenten 21 gestaltet Hierbei ist es vorteilhaft, wenn sich jeweils zwei Zylindersegmente schneiden. Alterntiv ist es auch möglich, jeweils kurze Abschnitte der Zylindersegmente 21 vorzusehen, die jeweils in entgegengesetzter Ausrichtung nebeneinander im Polymerschaum des Kerns 5 angeordnet sind. Die Verbindung der Zylindersegmente 21 kann zum Beispiel derart erfolgen, dass in den Zylindersegmenten 21 Schlitze ausgebildet sind, in die jeweils benachbarte Zylindersegmente 21 zusammengesteckt werden.

Die in Figur 7 dargestellte Ausführungsform mit Stegen 17 und Querstegen 19 entspricht der in Figur 3 dargestellten Ausführungsform. Lediglich die Anzahl an Stegen 17 und Querstegen 19 ist geringer. Die Anordnung der Stege 17 zu den Querstegen 19 ist in der in Figur 7 dargestellten Ausführungsform rechtwinklig.

Alternativ ist es auch möglich, die Stege 17, die sich vom Querträger 1 in Richtung des Stoßfängers 11 erstrecken, zum Beispiel zickzack- oder wellenförmig zu gestalten. Eine zickzackförmige Gestaltung der Stege 17 ist in Figur 8 dargestellt. Auch in der in Figur 8 dargestellten Ausführungsform sind die Stege 17 durch Querstege 19 miteinander verbunden. Alternativ zu Querstegen 19, wie sie in Figur 8 dargestellt sind, ist es auch möglich, die Querstege 19 ebenfalls zickzack- oder wellenförmig zu gestalten. Dabei kann die zickzackförmige Gestaltung sowohl in der Ausrichtung von oben nach unten, als auch in der Ausrichtung von links nach rechts, jeweils bezogen auf den Querträger am Kraftfahrzeug, ausgerichtet sein.

Neben den dargestellten Ausführungsformen ist jedoch auch jede beliebige weitere Gestaltung eines Einlegers 15 denkbar, der zunächst die Kraft aufnimmt und bei Einwirken einer vorgegebenen Maximalkraft versagt.

Weiterhin ist es auch möglich, dass eine Hülle 7 und ein Einleger 15 eingesetzt werden. Hierbei kann der Einleger 15 jede beliebige Geometrie annehmen. Die Hülle 7 ist immer so gestaltet, dass diese den Kern 5 umschließt.

## Patentansprüche

1. Bauelement zur Aufnahme von Energie von einem auf das Bauelement (3) ausgeübten Stoß durch Deformation, enthaltend einen Kern (5) aus einem Polymerschaum mit einer Dichte von maximal 0,2 g/cm³ und einem Druck-E-Modul von maximal 200 MPa gemessen nach DIN EN 826, wobei der Kern (5) einen Einleger (15) aus einem Polymermaterial enthält, **dadurch gekennzeichnet, dass** das Polymermaterial des Einlegers (15) eine Dichte von maximal 2,0 g/cm³ und einen Zug-E-Modul von mindestens 700 MPa gemessen nach DIN EN ISO 527 aufweist, wobei der Einleger (15) aus Zylindersegmenten (17) gebildet wird, die jeweils in entgegengesetzter Richtung ausgerichtet sind, wobei sich jeweils zwei Zylindersegmente schneiden oder jeweils kurze Abschnitte der Zylindersegmente (21) vorgesehen sind, die jeweils nebeneinander im Polymerschaum des Kerns (5) angeordnet sind.

2. Bauelement gemäß Anspruch 1, **dadurch gekennzeichnet, dass** der Kern (5) zusätzlich zumindest teilweise mit einer Hülle (7) aus einem Polymermaterial umschlossen ist.

3. Bauelement gemäß Anspruch 1 oder 2, **dadurch gekennzeichnet, dass** der Polymerschaum eine thermoplastische oder eine duroplastische Matrix enthält.

4. Bauelement gemäß einem der Ansprüche 1 bis 3, **dadurch gekennzeichnet, dass** der Polymerschaum aufgebaut ist aus einem oder mehreren Polymeren ausgewählt aus Styrol-(Co)-polymeren, Polyolefinen, Polyestern, Polyethern, Polyacrylaten, Polyacetalen, Polyamiden, Polyurethanen und Polymeren mit Vinylgruppen.

5. Bauelement gemäß einem der Ansprüche 1 bis 4, **dadurch gekennzeichnet, dass** der Polymerschaum ein Partikelschaum ist

6. Bauelement gemäß einem der Ansprüche 1 bis 5, **dadurch gekennzeichnet, dass** das Polymermaterial der Hülle (7) und/oder des Einlegers (15) ausgewählt ist aus Polyestern, Polyamiden, Polyethern, Polyacrylaten, Polyolefinen, Polyacetalen, Polymeren, die aus Vinylgruppen enthaltenden Monomeren aufgebaut sind, Styrol-(Co)-Polymerisaten und Mischungen daraus.

7. Bauelement gemäß einem der Ansprüche 1 bis 6, **dadurch gekennzeichnet, dass** das Polymermaterial der Hülle (7) und/oder des Einlegers (15) faserverstärkt ist.

8. Bauelement gemäß einem der Ansprüche 1 bis 7, **dadurch gekennzeichnet, dass** der Einleger (15) und/oder die Hülle (7) mit dem Kern (5) verklebt oder verschweißt sind.

9. Bauelement gemäß einem der Ansprüche 1 bis 8, **dadurch gekennzeichnet, dass** der Einleger (15) und/oder die Hülle (7) formschlüssig mit dem Kern (5) verbunden sind.

10. Bauelement gemäß einem der Ansprüche 1 bis 9, **dadurch gekennzeichnet, dass** der Einleger (15) Stege (17) aufweist, die in einem Winkel kleiner als 90° zur Einwirkrichtung des Stoßes ausgerichtet sind.

11. Bauelement gemäß Anspruch 10, **dadurch gekennzeichnet, dass** benachbarte Stege (17) des Einlegers durch Querstege (19) miteinander verbunden sind.

12. Bauelement gemäß einem der Ansprüche 1 bis 11, **dadurch gekennzeichnet, dass** die Hülle (7) den Kern (5) teilweise oder vollständig umschließt.

13. Bauelement gemäß einem der Ansprüche 1 bis 12, **dadurch gekennzeichnet, dass** sich der Querschnitt des Einlegers (15) in Richtung einer einwirkenden Kraft so ändert, dass ein Versagen zu einem annähernd idealen Verlauf der Kraft/Weg-Kurve führt.

14. Bauelement gemäß einem der Ansprüche 1 bis 13, **dadurch gekennzeichnet, dass** das Bauelement (3) eine Absorberstruktur zum Fußgängerschutz ist, die zwischen einem Querträger (1) und einem Stoßfänger (11) eines Kraftfahrzeugs angeordnet ist.

## Claims

1. A module for absorbing energy from an impact to which the module (3) has been subjected, via deformation, comprising a core (5) made of a polymer foam with a density of at most 0.2 g/cm³ and with a compressive modulus of elasticity of at most 200 MPa measured to DIN EN 826, where the core (5) comprises an insert (15) made of a polymer material, wherein the density of the polymer material of the insert (15) is at most 2.0 g/cm³ and its tensile modulus of elasticity is at least 700 MPa, measured to DIN EN ISO 527, where the insert (15) is formed from cylinder segments (17) respectively oriented in opposite direction, where respectively two cylinder segments intersect or respectively short sections of the cylinder segments (21) are provided, respectively arranged alongside one another in the polymer foam of the core (5).

2. The module according to claim 1, wherein the core (5) is additionally enclosed at least to some extent by a shell (7) made of a polymer material.

3. The module according to claim 1 or 2, wherein the polymer foam comprises a thermoplastic matrix or a thermoset matrix.

4. The module according to any of claims 1 to 3, wherein the polymer foam is composed of one or more polymers selected from styrene (co)polymers, polyolefins, polyesters, polyethers, polyacrylates, polyacetals, polyamides, polyurethanes and polymers having vinyl groups.

5. The module according to any of claims 1 to 4, wherein the polymer foam is a molded foam.

6. The module according to any of claims 1 to 5, wherein the polymer material of the shell (7) and/or of the insert (15) has been selected from polyesters, polyamides, polyethers, polyacrylates, polyolefins, polyacetals, polymers composed of monomers comprising vinyl groups, styrene (co)polymers, or a mixture thereof.

7. The module according to any of claims 1 to 6, wherein the polymer material of the shell (7) and/or of the insert (15) has fiber-reinforcement.

8. The module according to any of claims 1 to 7, wherein the insert (15) and/or the shell (7) has been adhesive-bonded to, or welded to, the core (5).

9. The module according to any of claims 1 to 8, wherein the insert (15) and/or the shell (7) has been interlock-bonded to the core (5).

10. The module according to any of claims 1 to 9, wherein the insert (15) has fillets (17) oriented at an angle smaller than 90° with respect to the direction from which the impact acts.

11. The module according to claim 10, wherein transverse fillets (19) connect adjacent fillets (17) of the insert to one another.

12. The module according to any of claims 1 to 11, wherein the shell (7) encloses the core (5) to some extent or completely.

13. The module according to any of claims 1 to 12, wherein the cross section of the insert (15) changes in the direction of an effective force in such a way that failure leads to an approximately ideal force/displacement curve.

14. The module according to any of claims 1 to 13, wherein the module (3) is an absorber structure to protect pedestrians and has been arranged between a transverse member (1) and bumper (11) of a motor vehicle.

## Revendications

1. Composant destiné à l'absorption d'énergie à partir d'un choc exercé sur le composant (3) par déformation, contenant un noyau (5) en une mousse polymère d'une densité d'au plus 0,2 g/m3 et d'un module E en pression d'au plus 200 MPa mesuré selon DIN EN 826, le noyau (5) contenant un insert (15) en un matériau polymère, **caractérisé en ce que** le matériau polymère de l'insert (15) présente une densité d'au plus 2,0 g/m³ et un module E en traction d'au moins 700 MPa mesuré selon DIN EN ISO 527, l'insert (15) étant formé par des segments cylindriques (17), qui sont chacun orientés en direction opposée, deux segments cylindriques se coupant à chaque fois ou des sections courtes des segments cylindriques (21) étant prévues à chaque fois, qui sont chacune agencées les unes à côté des autres dans la mousse polymère du noyau (5).

2. Composant selon la revendication 1, **caractérisé en ce que** le noyau (5) est en outre au moins partiellement entouré par une enveloppe (7) en un matériau polymère.

3. Composant selon la revendication 1 ou 2, **caractérisé en ce que** la mousse polymère contient une matrice thermoplastique ou duroplastique.

4. Composant selon l'une quelconque des revendications 1 à 3, **caractérisé en ce que** la mousse polymère est formée par un ou plusieurs polymères choisis parmi les (co)polymères de styrène, les polyoléfines, les polyesters, les polyéthers, les polyacrylates, les polyacétals, les polyamides, les polyuréthanes et les polymères contenant des groupes vinyle.

5. Composant selon l'une quelconque des revendications 1 à 4, **caractérisé en ce que** la mousse polymère est une mousse particulaire.

6. Composant selon l'une quelconque des revendications 1 à 5, **caractérisé en ce que** le matériau polymère de l'enveloppe (7) et/ou de l'insert (15) est choisi parmi les polyesters, les polyamides, les polyéthers, les polyacrylates, les polyoléfines, les polyacétals, les polymères formés à partir de monomères contenant des groupes vinyle, les (co)polymères de styrène et leurs mélanges.

7. Composant selon l'une quelconque des revendications 1 à 6, **caractérisé en ce que** le matériau polymère de l'enveloppe (7) et/ou de l'insert (15) est renforcé par des fibres.

8. Composant selon l'une quelconque des revendications 1 à 7, **caractérisé en ce que** l'insert (15) et/ou l'enveloppe (7) sont collés ou soudés avec le noyau (5).

9. Composant selon l'une quelconque des revendications 1 à 8, **caractérisé en ce que** l'insert (15) et/ou l'enveloppe (7) sont reliés par complémentarité de forme avec le noyau (5).

10. Composant selon l'une quelconque des revendications 1 à 9, **caractérisé en ce que** l'insert (15) comprend des traverses (17) qui sont orientées à un angle de moins de 90° par rapport à la direction d'action du choc.

11. Composant selon la revendication 10, **caractérisé en ce que** des traverses (17) voisines de l'insert sont reliées entre elles par des traverses transversales (19).

12. Composant selon l'une quelconque des revendications 1 à 11, **caractérisé en ce que** l'enveloppe (7) entoure en partie ou en totalité le noyau (5).

13. Composant selon l'une quelconque des revendications 1 à 12, **caractérisé en ce que** la section transversale de l'insert (15) se modifie dans la direction d'une force agissant de sorte qu'une défaillance conduise à une évolution presque idéale de la courbe force/trajectoire.

14. Composant selon l'une quelconque des revendications 1 à 13, **caractérisé en ce que** le composant (3) est une structure d'absorption pour la protection des piétons, qui est agencée entre un élément transversal (1) et un pare-chocs (11) d'une automobile.
